# EUROPÄISCHE PATENTSCHRIFT

(11) **EP 0 562 432 B1**
(45) Veröffentlichungstag und Bekanntmachung des Hinweises auf die Patenterteilung: **20.11.1996**
(21) Anmeldenummer: 93104328.5
(22) Anmeldetag: 17.03.1993
(51) Int. Cl.: B65G 59/02

(54) **Verfahren und Vorrichtung zum Abräumen von Zuschnittstapeln von einer Palette oder dergleichen**
Method and device for unloading sheetpackages from a pallet or the like
Procédé et dispositif pour le déchargement de paquets de feuilles d'une palette ou analogue

(30) Priorität: 27.03.1992 DE 4210152
(43) Veröffentlichungstag der Anmeldung: 29.09.1993
(73) Patentinhaber: Focke & Co. (GmbH & Co.), D-27283 Verden (DE)
(72) Erfinder: Focke, Heinz, W-2810 Verden (DE); Häfker, Thomas, W-2815 Etelsen (DE)
(74) Vertreter: Bolte, Erich, Dipl.-Ing.

(56) Entgegenhaltungen:
- EP-A- 0 548 519
- DE-A- 2 223 782
- GB-A- 650 703

## Beschreibung

Die Erfindung betrifft ein Verfahren zum Abnehmen von Zuschnittstapeln, insbesondere aus Verpackungszuschnitten, von einer Unterlage, insbesondere von einer Palette und im Zusammenhang mit einer Verpackungsmaschine, wobei die Zuschnittstapel auf einer dünnen, flexiblen Zwischenlage ruhen und durch Abziehen derselben mit dieser von der Unterlage abgefördert werden. Weiterhin betrifft die Erfindung eine Vorrichtung zur Durchführung des Verfahrens.

Bei der Fertigung von Packungen aus dünnem Karton, z. B. bei der Herstellung von Klappschachteln (Hinge-Lid-Packungen) für Zigaretten, ist es üblich, die Packungszuschnitte außerhalb des Verpackungsbetriebes, nämlich an der Fertigungsstätte des Verpackungsmaterials (Papierfabrik) durch Stanzen von Materialbahnen oder anderen "Nutzen" herzustellen. Die fertigen Zuschnitte werden gestapelt (Zuschnittstapel) an den Verwendungsort geliefert. Die Verpackungsmaschinen sind üblicherweise mit maschinenseitigen Zuschnitt-Magazinen ausgestattet, in die die Zuschnittstapel eingegeben werden.

Wegen der zunehmend höheren Leistung der Verpackungsmaschinen ist die bisher vorwiegend manuelle Beschickung der Zuschnittmagazine problematisch. Es ist bereits eine Anzahl von Lösungen für die mechanische Handhabung der Zuschnittstapel im Bereich der Verpackungsmaschinen bekanntgeworden. Ein besonders wichtiges Problem ergibt sich dadurch, daß die Zuschnittstapel üblicherweise auf Paletten angeliefert werden. Die Zuschnittstapel sind dabei in Lagen übereinander angeordnet. Jede dieser Stapellagen besteht aus einer Vielzahl von üblicherweise in Reihen nebeneinander angeordneten Zuschnittstapeln. Die Schwierigkeit liegt nun darin, die Zuschnittstapel einzeln oder in Gruppen von der Palette aufzunehmen und an ein Transportsystem der Verpackungsmaschine zu übergeben.

Aus der GB 650 703 ist es bekannt, Stapel von Blättern mit Hilfe einer gesonderten Lage von einer Unterlage abzuziehen.

Aus der nachveröffentlichten und lediglich als Stand der Technik nach Artikel 54 (3) EPÜ zu berücksichtigenden DP-A-0 548 519 ist ein Verfahren bekannt, bei dem auf jeweils zwei Zwischenlagen ruhende Stapel durch Abziehen der oberen und Festhalten der unteren Zwischenlage abgenommen werden.

Die Erfindung befaßt sich mit dem Problem, eine leistungsfähige, für die Zuschnitte bzw. Zuschnittstapel schonende Handhabung derselben beim Abnehmen von einer Palette oder einer anderen Unterlage zu gewährleisten. Auch soll eine genaue Handhabung der ZwischenJagen möglich sein. Zur Lösung dieser Aufgabe ist das erfindungsgemäße Verfahren durch folgende Merkmale gekennzeichnet:
a) die Zuschnittstapel liegen auf zwei Zwischenlagen auf,
b) die Zwischenlagen werden an einander gegenüberliegenden Seiten erfaßt, derart, daß die obere Zwischenlage mit den Zuschnittstapeln abgezogen und die untere Zwischenlage in der Ausgangsstellung festgehalten wird,
c) die beiden jeweils übereinander angeordneten Zwischenlagen bestehen aus einem einstückigen Zwischenlagenzuschnitt, der in Abförderrichtung der Stapellage eine Schwächungslinie aufweist, entlang welcher der Zwischenlagenzuschnitt unter Bildung der Zwischenlagen gefaltet wird und die (die Schwächungslinie) beim Abziehen der oberen Zwischenlage mit der Stapellage von der unteren Zwischenlage durchtrennt wird.

Es ist grundsätzlich bekannt, bei Anordnung mehrerer Lagen von Zuschnittstapeln auf einer Palette zwischen den Lagen trennende Zuschnitte anzuordnen, nämlich Zwischenlagen aus dünnem, flexiblen Material. Diese Zwischenlagen können beispielsweise aus Papier oder dünnem Karton bestehen.

Bei dem erfindungsgemäßen Verfahren erhalten die Zwischenlagen eine neue Aufgabe. Sie dienen zum Abtransport der Zuschnittstapel bzw. einer kompletten Stapellage, indem diese durch Wegziehen der Zwischenlage von der Palette abgefördert wird. Dabei dient die obere Zwischenlage zum Abfördern der auf dieser ruhenden Stapellage, während die untere der beiden Zwischenlagen in der Stapelposition fixiert wird, so daß die sich darunter befindenden Zuschnittstapel in der Ursprungsposition auf der Palette oder einer anderen Unterlage gehalten werden.

Die durch Ziehen der Zwischenlage von der Palette abgezogene Stapellage wird auf eine unmittelbar neben der Palette sich erstreckende Ablage gefördert. Diese liegt in Höhe der Unterseite der abgezogenen Stapellage, so daß die Zuschnittstapel auf diese Ablage gezogen werden. Die Ablage ist vorzugsweise ein Förderer (Rollenförderer), der die einzelnen Reihen der Stapellage nacheinander abfördert. Damit befinden sich die Zuschnittstapel in dem Förderfluß zur Verpackungsmaschine.

Nach einem weiteren Vorschlag der Erfindung bestehen jeweils zwei übereinander angeordnete Zwischenlagen aus einem einstückigen Zwischenlagenzuschnitt. Diese Ausführungsform erweist sich bei der Herstellung und Handhabung von Zwischenlagen als besonders vorteilhaft, da jeweils eine untere und eine obere Zwischenlage durch Falten des Zwischenlagenzuschnitts entlang einer in Abförderrichtung der Stapellage angeordneten Schwächungslinie, die vorzugsweise als Perforationslinie ausgebildet ist, entstehen. Dabei befinden sich die Zwischenlagen automatisch in einer gewünschten Relativzustellung zueinander. Die Perforationslinie wird auf einfache Weise durch Abziehen der oberen von der unteren Zwischenlage durchtrennt.

Die erfindungsgemäße Vorrichtung ist mit Zugorganen ausgerüstet, die jeweils eine Zwischenlage am Rand erfassen und seitlich wegziehen. Bei zwei übereinander angeordneten Zwischenlagen wird jede dieser Zwischenlage an einander gegenüberliegenden Seiten durch ein Zugorgan mit Klemmbacken erfaßt. Die untere Zwischenlage wird dadurch in der Stapelposition auf der Palette gehalten und die obere Zwischenlage mit der Stapellage abgezogen.

Weitere Einzelheiten der Erfindung beziehen sich auf die Ausbildung der Zwischenlagen sowie deren Handhabung und Förderorgane für die Zuschnittstapel.

Weitere Einzelheiten des Verfahrens und der Vorrichtung werden nachfolgend anhand eines in den Zeichnungen dargestellten Ausführungsbeispiels näher erläutert. Es zeigt:

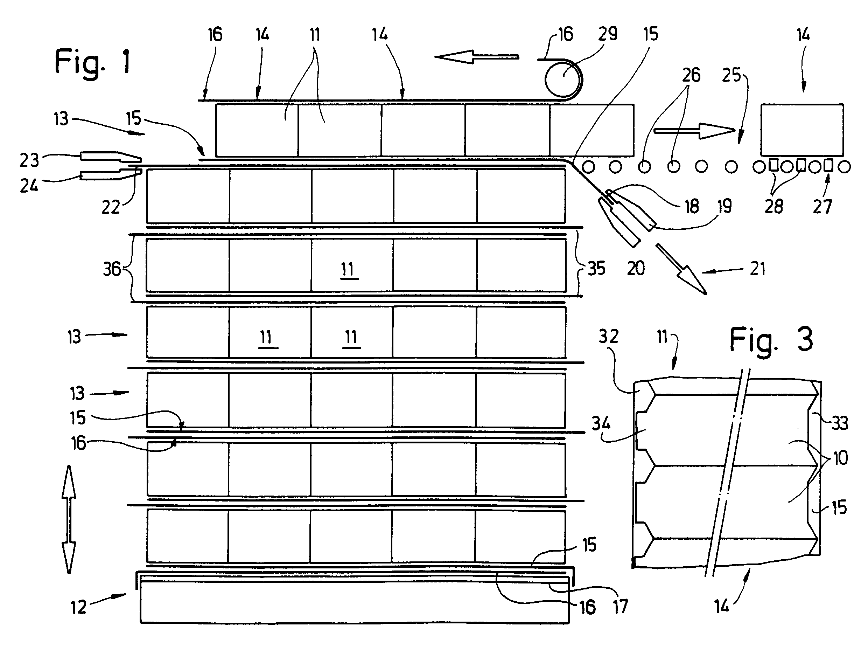

- Fig. 1: Eine Palette mit Zuschnittstapeln in Seitenansicht während des Abräumens,

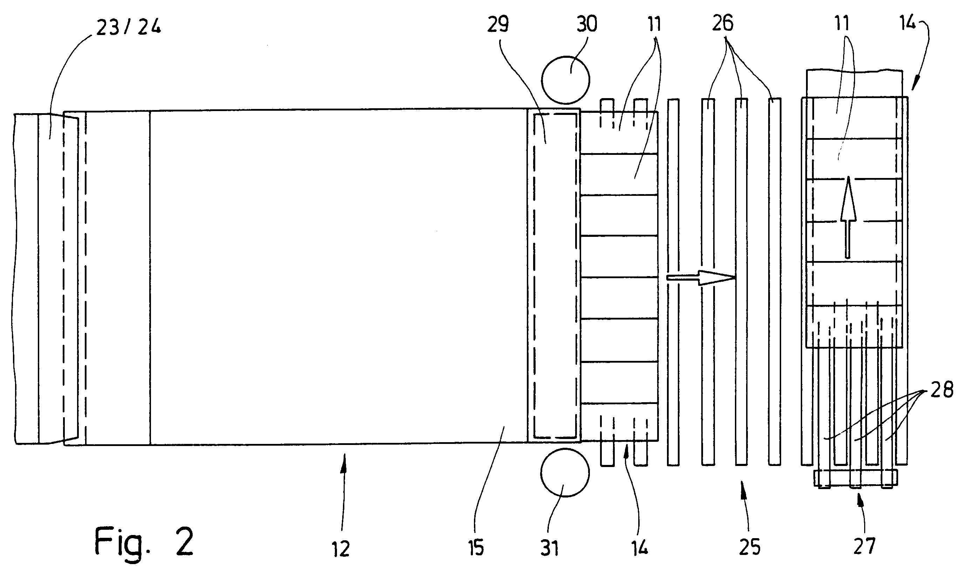

- Fig. 2: eine Grundrißdarstellung zu Fig. 1,
- Fig. 3: einen Ausschnitt einer Lage aus Zuschnittstapeln im Grundriß, in vergrößertem Maßstab,
- Fig. 4: einen ausgebreiteten Zwischenlagenzuschnitt, und
- Fig. 5: den Zwischenlagenzuschnitt gemäß Fig. 4 in gefaltetem Zustand.

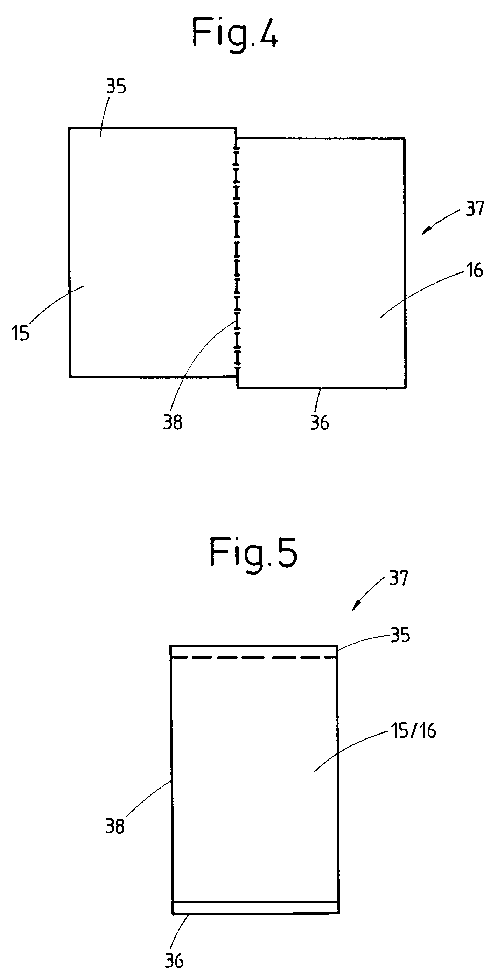

Bei dem in den Zeichnungen dargestellten Ausführungsbeispiel geht es um die Handhabung von Zuschnitten 10 aus dünnem Karton für die Herstellen von Klappschachteln (Hinge-Lid-Packungen) für Zigaretten. Die Zuschnitte in den aus Fig. 3 ersichtlichen Konturen sind durch Stanzen von entsprechenden Materialbahnen oder Materialstücken gefertigt und am Herstellungsort unter Bildung von Zuschnittstapeln 11 übereinandergelegt. Jeder Zuschnittstapel 11 besteht aus einer Vielzahl von übereinanderliegenden, exakt ausgerichteten Zuschnitten 10.

Die Zuschnittstapel 11 sind bei dem vorliegenden Ausführungsbeispiel auf einer Palette 12 gelagert. Mit dieser werden die Zuschnittstapel 11 an den Verwendungsort geliefert, also einer Verpackungsmaschine zugestellt.

Die Zuschnittstapel 11 sind lagenweise auf der Palette 12 angeordnet, also unter Bildung einer Mehrzahl von Stapellagen 13. Jede dieser Stapellagen 13 besteht aus einer Vielzahl von nebeneinander angeordneten Zuschnittstapeln 11. Diese sind in Reihen 14 angeordnet. Wie insbesondere aus Fig. 3 ersichtlich, besteht jede Reihe 14 aus dicht nebeneinanderliegenden Zuschnittstapeln 11. Diese sind exakt zueinander aus- und hinsichtlich ihrer Relativstellung gleichgerichtet. Die langgestreckten annähernd rechteckigen Zuschnitte 10 sind mit ihrer Längserstreckung quer zu den Reihen 14 angeordnet.

Zwischen den übereinander angeordneten Stapellagen 13 sind Zwischenlagen 15 und 16 angeordnet. Diese bestehen aus einem dünnen, flexiblen Material, insbesondere aus Papier oder dünnem Karton. Als eine Besonderheit sind jeweils zwei derartiger Zwischenlagen 15, 16 zwischen zwei übereinander liegenden Stapel lagen 13 angeordnet. Auch zwischen der unteren Stapellage 13 und einem Palettenboden 17 befinden sich zwei Zwischenlagen 15, 16.

Mit Hilfe dieser Zwischenlagen 15, 16 werden die Zuschnittstapel 11 lagenweise bzw. reihenweise von der Palette 12 abgeräumt und in den Transportfluß zur Verpackungsmaschine eingeführt. Zu diesem Zweck wird die der jeweils abzuräumenden, oberen Stapellage 13 zugekehrte Zwischenlage 15 an einem Rand erfaßt und in Horizontalrichtung bzw. in der Ebene der Stapellagen 13 von der Palette 12, nämlich von einem auf dieser verbleibenden Reststapel abgezogen. Zu diesem Zweck wird die Zwischenlage 15 an einem in Förderrichtung der abzuräumenden Stapellage 13 vornliegenden Rand 18 durch Klemmorgane eines Zugförderers (nicht gezeigt) erfaßt. Bei dem dargestellten Ausführungsbeispiel wird der Rand 18 durch zwei langgestreckte, nämlich sich (annähernd) über die volle Breite der Zwischenlage 15 erstreckende Klemmbacken 19, 20 erfaßt. Auf diese Klemmbacken 19, 20 einer zangenartigen Haltevorrichtung wird eine Zugkraft in Richtung des Pfeils 21 ausgeübt. Dadurch wird die Zwischenlage 15 mit den auf dieser ruhenden Zuschnittstapel 11 von der Unterlage, nämlich der unteren Zwischenlage 16, abgezogen. Die obere Stapellage 13 wird auf diese Weise von der Palette 12 bzw. von dem Reststapel abgefördert.

Bei dem vorliegenden Ausführungsbeispiel gleitet die obere Zwischenlage 15 bei dieser Abziehbewegung auf der unteren Zwischenlage 16. Diese wird zur Sicherung der darunter liegenden Stapellage 13 in der Stapelposition fixiert. An einem in Förderrichtung rückwärtigen, zum Rand 18 gegenüberliegenden Rand 22 wird die untere Zwischenlage 16 erfaßt und in der Position gehalten. Auch hierfür ist ein Halteorgan mit Klemmbacken 23, 24 vorgesehen. Dieses Halteorgan ist feststehend angeordnet.

Die mit der bzw. durch die Zwischenlage 15 vom Reststapel abgezogene obere Stapellage 13 wird auf einen Abförderer 25 gezogen. Dieser befindet sich mit der Förderebene in Höhe der Unterseite der oberen Stapellage 13 bzw. geringfügig darunter. Dadurch werden die Zuschnittstapel 11 reihenweise nacheinander auf dem Förderer 25 abgelegt. Die Reihen 14 sind zu diesem Zweck quer zur Förderrichtung orientiert. Der Abförderer 25 ist hier als Rollenförderer ausgebildet mit einer Mehrzahl von drehbaren Rollen 26.

Die als Transportmittel für die Stapellage 13 dienende Zwischenlage 15 wird zur Übergabe der Reihen 14 an den Abförderer 25 nach unten weggezogen. Bei dem vorliegenden Ausführungsbeispiel wird die Zwischenlage 15 durch die unterhalb des Abförderers 25 angeordneten Klemmbacken 19, 20 in einer schräggerichteten Ebene von etwa 45° nach unten abgezogen. Die Zuschnittstapel 11 kommen dadurch von der Zwischenlage 15 frei und werden selbsttätig auf dem Abförderer 25 abgelegt.

Der Abförderer 25 transportiert die Reihen 14 bis zu einem Querförderer 27, der hier als Gurtförderer ausgebildet ist mit einer Mehrzahl von zwischen den Rollen 26 laufenden Gurten 28. Der Querförderer 27 ist auf- und abbewegbar. Nach Erreichen einer Reihe 14 in einer Position oberhalb der Gurte 28 werden diese angehoben. Die Reihe 14 kann nun abgefördert werden zur Verpackungsmaschine.

Die ursprünglich untere Zwischenlage 16 bildet nach dem Abräumen einer Stapellage 13 eine obere Abdeckung für die nächstfolgende Stapellage. Während des Abziehens dieser Stapellage wird gleichzeitig und synchron auch diese zweite Zwischenlage 16 abgenommen. Bei dem gezeigten Ausführungsbeispiel wird diese Zwischenlage 16 nach Maßgabe der Abziehbewegung der Zwischenlage 15 von einem Förderer aufgenommen, nämlich einer quer zur Förderrichtung angeordneten Walze 29. Diese ist mit Einrichtungen zum Erfassen der Zwischenlage 16 versehen, insbesondere mit Saugbohrungen. Die Zwischenlage 16 wird durch die Walze 29 umgelenkt und dabei von der Oberseite der Stapellage 13 abgenommen. Die Zwischenlage 16 kann durch weitere Förderorgane aus dem Bereich der Palette 12 abtransportiert und zusammen mit der ursprünglich oberen Zwischenlage 15 zum Herstellungsort für die Zuschnitte 10 zurückgebracht werden.

Die Walze 29 hat zusätzlich eine Führungs- und Haltefunktion beim Abziehen der Stapellage 13. Die Walze 29 befindet sich an einem in Abförderrichtung vornliegenden Randbereich der Palette 12 bzw. der Stapel lagen 13. Hier wird ein leichter Druck auf die Zuschnittstapel 10 bei der Abförderbewegung ausgeübt, so daß diese in ihrer Formation und Position gehalten werden.

Darüber hinaus sind zusätzliche, seitliche Führungsorgane für die abgeförderte Stapellage 13 vorhanden, nämlich aufrechte Führungswalzen 30, 31. Diese sind seitlich dicht neben der Palette bzw. den Stapellagen 13 angeordnet und um eine aufrechte Achse drehbar. Die Führungswalzen 30, 31 sind eine seitliche Stütze für die Zuschnittstapel 11 bzw. für die Reihen 14 im Bereich der Übergabe an den Abförderer 25.

Die Zwischenlagen 15, 16 können in besonderer Weise ausgebildet sein. Die einander zugekehrten Oberflächen weisen aufgrund entsprechender Beschichtung einen niedrigen Reibungsbeiwert auf, so daß die beschriebene gleitende Relativbewegung erleichtert ist. Die den Zuschnittstapeln 11 zugekehrten Oberflächen der Zwischenlagen 15, 16 können hingegen einen erhöhten Reibungsbeiwert aufweisen, so daß die Zuschnittstapel 11 gegen Relativverschiebung zusätzlich gesichert sind. Des weiteren können die Zwischenlagen 15, 16 für mehrfachen Gebrauch eingerichtet sein.

Bei der Handhabung von Zuschnitten 10 für Klappschachteln sind durch die besondere Ausgestaltung der Zuschnitte 10 an den Längsseiten der Reihen 14 Ausnehmungen 32 und 33 gebildet. Die Ausnehmungen 32 entstehen zwischen benachbarten Zuschnittstapeln 11 aufgrund der Ausbildung der Zuschnitte 10 im Kopfbereich, nämlich durch das Vorhandensein eines Deckelinnenlappens 34. Auf der gegenüberliegenden Seite befinden sich die Ausnehmungen 33 in der Mitte der Zuschnittstapel 11 durch die Begrenzung von Seitenlappen des Zuschnitts mit schrägen Kanten. Die Zwischenlagen 15, 16 sind zweckmäßigerweise an diese Gestalt der Zuschnitte 10 bzw. Zuschnittstapel 11 angepaßt. So können beispielsweise die jeweils obenliegenden Zwischenlagen 15 auf der in Transportrichtung rückwärtigen Seite, also im Bereich der Klemmbacken 23, 24, Ausnehmungen aufweisen, die im Bereich der Ausnehmungen 32 liegen. An diesen Stellen kann demnach die untere Zwischenlage 16 durch die Klemmbacken 23, 24 erfaßt werden, obwohl die Zwischenlagen 15, 16 insgesamt zueinander ausgerichtet sind. Entsprechend ist auf der gegenüberliegenden Seite die untere Zwischenlage 16 mit Ausnehmungen im Bereich der Ausnehmungen 33 versehen, so daß hier die obere Zwischenlage durch die Klemmbacken 19, 20 frei von der Zwischenlage 16 erfaßt werden kann. Die Klemmbacken müssen in diesem Falle so ausgebildet sein, daß sie nur im Bereich der Ausnehmungen 32, 33 wirksam werden.

Bei dem dargestellten Ausführungsbeispiel sind statt dessen die Zwischenlagen 15, 16 mit Versatz zueinander angeordnet. Die oberen Zwischenlagen 15 sind auf der in Förderrichtung vornliegenden Seite, also den Klemmbacken 19, 20 zugekehrt, mit einem aus dem Bereich der Stapellagen 13 heraustretenden Vorsprung 35 gelegt. Auf der gegenüberliegenden Seite sind die unteren Zwischenlagen 16 mit einem Vorsprung 36 zum Erfassen durch die Klemmbacken 23, 24 angeordnet.

Die unteren Zwischenlagen 15, 16 auf dem Palettenboden 17 sind analog ausgebildet. Die Vorsprünge 35, 36 sind hier nach unten umgefaltet, bevor sie in Benutzung genommen werden.

Bei dem Ausführungsbeispiel der Fig. 4 und Fig. 5 bestehen jeweils zwei übereinander angeordnete Zwischenlagen 15, 16 aus einem einstückigen Zwischenlagenzuschnitt 37, der in Abförderrichtung der Stapellage 13 eine Perforationslinie 38 aufweist. Die Konturen des Zwischenlagenzuschnitts 37 sind quer zur Perforationslinie 38 stufenartig versetzt ausgebildet, so daß diametral angeordnete Absätze entstehen, die bei Falten des Zwischenlagenzuschnitts 37 entlang der Perforationslinie 38 die Vorsprünge 35, 36 der Zwischenlagen 15, 16 bilden (Fig. 5). Dabei weisen beide Zwischenlagen 15, 16 die gleiche Breite auf. Beim Abziehen der oberen Zwischenlage 15 mit der Stapellage 13 von der in der Ausgangsstellung festgehaltenen unteren Zwischenlage 16 wird der Zwischenlagenzuschnitt 37 entlang der Perforationslinie 38 durchtrennt, so daß zwei voneinander unabhängige, auf die bereits beschriebene Weise zu betätigende Zwischenlagen 15, 16 entstehen.

Die Stapellagen werden bei dem vorliegenden Ausführungsbeispiel auf stets gleichbleibendem Niveau abgefördert. Dieses ist durch die Höhe des Abförderers 25 gegeben. Die Palette 12 wird dabei abschnittweise angehoben, so daß stets die obere, freie Stapellage 13 in einer Abförderebene liegt.

## Patentansprüche

1. Verfahren zum Abnehmen von Zuschnittstapeln (11), insbesondere aus Verpackungszuschnitten, von einer Unterlage, insbesondere von einer Palette (12) und im Zusammenhang mit einer Verpackungsmaschine, wobei die Zuschnittstapel (11) auf einer dünnen, flexiblen Zwischenlage (15) ruhen und durch Abziehen derselben mit dieser von der Unterlage abgefördert werden, **gekennzeichnet durch** folgende Merkmale:
a) die Zuschnittstapel (11) liegen auf zwei Zwischenlagen (15, 16) auf,
b) die Zwischenlagen (15, 16) werden an einander gegenüberliegenden Seiten erfaßt, derart, daß die obere Zwischenlage (15) mit den Zuschnittstapeln (11) abgezogen und die untere Zwischenlage (16) in der Ausgangsstellung festgehalten wird,
c) die beiden jeweils übereinander angeordneten Zwischenlagen (15, 16) bestehen aus einem einstückigen Zwischenlagenzuschnitt (37), der in Abförderrichtung der Stapellage (13) eine Schwächungslinie aufweist, entlang welcher der Zwischenlagenzuschnitt (37) unter Bildung der Zwischenlagen (15, 16) gefaltet wird und die (die Schwächungslinie) beim Abziehen der oberen Zwischenlage (15) mit der Stapellage (13) von der unteren Zwischenlage (16) durchtrennt wird.

2. Verfahren nach Anspruch 1, dadurch gekennzeichnet, daß eine Stapellage (13) aus mehreren nebeneinander angeordneten Zuschnittstapeln (11) durch die obere Zwischenlage (15) von der unteren Zwischenlage (16) abgezogen wird.

3. Verfahren nach Anspruch 1 oder 2, dadurch gekennzeichnet, daß die Zuschnittstapel (11) durch die Zwischenlage (15) auf eine Absetzebene gezogen werden, insbesondere auf einen in Höhe der Zwischenlage (15) sich erstreckenden Abförderer (25), wobei die Zwischenlage (15) in einer Ebene unterhalb des Abförderers (25) weggezogen wird.

4. Verfahren nach Anspruch 3, dadurch gekennzeichnet, daß die Zuschnittstapel (11) in mehreren Reihen (14) in Dichtlage auf der Zwischenlage (15) ruhen, wobei die Reihen (14) quer zur Abförderrichtung orientiert sind.

5. Verfahren nach Anspruch 1 oder einem der weiteren Ansprüche, dadurch gekennzeichnet, daß mehrere, zunächst übereinanderliegende Lagen Zuschnittstapel (11) nacheinander von der Unterlage bzw. Palette (12) unter Erfassen der jeweils oberen Zwischenlage (15) und Halten der jeweils unteren Zwischenlage (16) abgezogen werden.

6. Verfahren nach Anspruch 3 oder einem der weiteren Ansprüche, dadurch gekennzeichnet, daß die obere Zwischenlage (15) am Rand einer darunterliegenden Stapellage (13) in einer schräg nach unten gerichteten Ebene abgezogen wird.

7. Verfahren nach Anspruch 1 oder einem der weiteren Ansprüche, dadurch gekennzeichnet, daß die untere, nach dem Abziehen der oberen Zwischenlage (15) auf einer Stapellage (13) liegende Zwischenlage (16) während des Abziehens dieser Stapellage (13) durch einen gesonderten Förderer abgenommen wird, insbesondere durch eine oberhalb der abgezogenen Stapellage (13) angeordnete Walze (29) mit Saugbohrungen.

8. Verfahren nach Anspruch 7, dadurch gekennzeichnet, daß die Walze (29) während des Abziehens der Stapellage (13) mit insbesondere leichtem Druck auf den Zuschnittstapeln (11) im Randbereich der Palette (12) aufliegt.

9. Verfahren nach Anspruch 1 oder einem der weiteren Ansprüche, dadurch gekennzeichnet, daß die ZwischenJagen (15, 16) versetzt zueinander und zu den Stapel lagen (13) auf diesen positioniert sind, derart, daß die obere Zwischenlage (15) auf der in Förderrichtung vornliegenden Seite einen Vorsprung (35) und die untere Zwischenlage (16) auf der in Transportrichtung rückwärtigen Seite einen Vorsprung (36) bildet, wobei die Vorsprünge (35, 36) jeweils über die Konturen der Stapellagen (13) hinwegragen.

10. Verfahren nach Anspruch 1 oder einem der weiteren Ansprüche, dadurch gekennzeichnet, daß der Zwischenlagenzuschnitt (37) quer zur Schwächungslinie (Perforationslinie 38) stufenartig versetzt ausgebildete Konturen aufweist, derart, daß diametral angeordnete Absätze als Vorsprünge (35, 36) der Zwischenlagen (15, 16) entstehen.

11. Verfahren nach Anspruch 1 oder einem der weiteren Ansprüche, dadurch gekennzeichnet, daß die Zwischenlagen (15, 16) im Bereich von Ausnehmungen (32, 33) der Reihen (14) aus Zuschnittstapeln (11) entsprechende Ausnehmungen aufweisen, derart, daß die obere Zwischenlage (15) auf der in Transportrichtung vornliegende Seite im Bereich von Ausnehmungen (33) und die untere Zwischenlage (16) auf der in Transportrichtung rückwärtigen Seite im Bereich von Ausnehmungen (32) einen entsprechenden Vorsprung bzw. über Stand zur jeweils anderen Zwischenlage (15, 16) bildet.

12. Vorrichtung zur Durchführung des Verfahrens nach Anspruch 1 oder einem der weiteren Ansprüche, wobei Zuschnittstapel (11), insbesondere aus Verpackungszuschnitten, von einer Unterlage, insbesondere von einer Palette (12) und im Zusammenhang mit einer Verpackungsmaschine, abnehmbar sind, wobei weiterhin die Zuschnittstapel (11) auf einer dünnen, flexiblen Zwischenlage (15) ruhen und durch Abziehen derselben mit dieser von der Unterlage abförderbar sind und wobei ein Überstand bzw. Vorsprung (35) der Zwischenlage (15) durch ein Abziehorgan erfaßbar und zur Mitnahme der Zwischenlage (15) bewegbar ist, dadurch gekennzeichnet` daß auf der zum bewegbaren und ein Klemmorgan mit Klemmbacken (19, 20) aufweisenden Abziehorgan gegenüberliegenden Seite der Zwischenlage (15) ein feststehendes Halteorgan mit Klemmbacken (23, 24) zum Erfassen und Halten einer unteren Zwischenlage (16) in einer Ursprungsposition auf einer Unterlage (Palette 12) oder einer unteren Stapellage (13) angeordnet ist.

13. Vorrichtung nach Anspruch 12, dadurch gekennzeichnet, daß zum Abnehmen einer auf einer abzutransportierenden Stapellage (13) liegenden Zwischenlage (16) ein Förderer, insbesondere eine drehbar angetriebene Walze (29) mit Saugbohrungen oberhalb der jeweils oberen Stapellage (13) in einem in Förderrichtung vornliegenden Randbereich angeordnet ist.

14. Vorrichtung nach Anspruch 12 oder 13, gekennzeichnet durch seitliche Führungsorgane für die Zuschnittstapel (11) der übereinanderliegenden Stapellagen (13), insbesondere durch aufrechte, drehbare Führungswalzen (30, 31) seitlich unmittelbar neben den Stapellagen (13) in einem in Förderrichtung vornliegenden Randbereich.

15. Vorrichtung nach Anspruch 12 oder einem der weiteren Ansprüche, dadurch gekennzeichnet, daß in Förderrichtung neben den Stapellagen (13) jeweils in Höhe der Unterseite einer abzufördernden Stapellage ein unmittelbar an diese anschließender Abförderer (25) aus drehbaren Rollen (26) angeordnet ist zur Aufnahme der Reihen der abgeförderten Stapellage (13).

## Claims

1. Process for removing stacks of blanks (11), in particular comprising packaging blanks, from a base, in particular from a pullet (12) and in conjunction with a packaging machine, the stacks of blanks (11) resting on a thin, flexible intermediate sheet (15) and being removed from the base with said sheet by way of the latter being drawn off, characterized by the following features:
a) the stacks of blanks (11) rest on two intermediate sheets (15, 16),
b) the intermediate sheets (15, 16) are gripped on mutually opposite sides such that the upper intermediate sheet (15) is drawn off with the stacks of blanks (11) and the lower intermediate sheet (16) is secured in the initial position,
c) the two intermediate sheets (15, 16), arranged in each case one above the other, comprise a single-piece intermediate-sheet blank (37) which, in the removal direction of the stack layer (13), has a weakening line along which the intermediate-sheet blank (37) is folded, the intermediate sheets (15, 16) being formed in the process, and which (the weakening line) is severed when the upper intermediate sheet (15) is drawn off, with the stack layer (13), from the lower intermediate sheet (16).

2. Process according to Claim 1, characterized in that a stack layer (13) comprising a number of stacks of blanks (11) arranged one beside the other is drawn off from the lower intermediate sheet (16) by the upper intermediate sheet (15).

3. Process according to Claim 1 or 2, characterized in that the stacks of blanks (11) are drawn, by the intermediate sheet (15), onto a set-down plane, in particular onto a removal conveyor (25) which extends at level with the intermediate sheet (15), the intermediate sheet (15) being drawn away in a plane beneath the removal conveyor (25).

4. Process according to Claim 3, characterized in that the stacks of blanks (11) rest in close proximity in a number of rows (14) on the intermediate sheet (15), the rows (14) being oriented tranversely with respect to the removal direction.

5. Process according to Claim 1 or one of the further claims, characterized in that a number of layers of stacks of blanks (11) which are initially located one above the other are drawn off from the base or pallet (12) one after the other while the respectively upper intermediate sheet (15) is gripped and the respectively lower intermediate sheet (16) is retained.

6. Process according to Claim 3 or one of the further claims, characterized in that the upper intermediate sheet (15) is drawn off in an obliquely downwardly directed plane, at the border of a stack layer (13) located therebeneath.

7. Process according to Claim 1 or one of the further claims, characterized in that the lower intermediate sheet (16) located on a stack layer (13) after the upper intermediate sheet (15) has been drawn off is removed by a separate conveyor as said stack layer (13) is drawn off, in particular it is removed by a roll (29) which is arranged above the drawn-off stack layer (13) and has suction bores.

8. Process according to Claim 7, characterized in that, as the stack layer (13) is drawn off, the roll (29) rests on the stacks of blanks (11), in particular with slight pressure, in the border region of the pallet (12).

9. Process according to Claim 1 or one of the further claims, characterized in that the intermediate sheets (15, 16) are positioned on the stack layers (13) so as to be offset with respect to one another and with respect to said stack layers (13), such that the upper intermediate sheet (15) forms a protrusion (35) on the side located at the front in the conveying direction and the lower intermediate sheet (16) forms a protrusion (36) on the side located at the rear in the transporting direction, the protrusions (35, 36) in each case projecting beyond the contours of the stack layers (13).

10. Process according to Claim 1 or one of the further claims, characterized in that the intermediate-sheet blank (37) has contours which are designed to be offset in the manner of steps transversely with respect to the weakening line (perforation line 38), this resulting in diametrically opposite steps in the form of protrusions (35, 36) of the intermediate sheets (15, 16).

11. Process according to Claim 1 or one of the further claims, characterized in that, in the region of recesses (32, 33) of the rows (14) of stacks of blanks (11), the intermediate sheets (15, 16) have corresponding recesses such that, in the region of recesses (33), the upper intermediate sheet (15) forms a corresponding protrusion or overhang relative to the respectively other intermediate sheet (16) on the side located at the front in the transporting direction and, in the region of recesses (32), the lower intermediate sheet (16) forms a corresponding protrusion or overhang in relation to the respectively other intermediate sheet (15) on the side located at the rear in the transporting direction.

12. Apparatus for carrying out the process according to Claim 1 or one of the further claims, it being possible for stacks of blanks (11), in particular comprising packaging blanks, to be removed from a base, in particular from a pallet (12) and in conjunction with a packaging machine, furthermore the stacks of blanks (11) resting on a thin, flexible intermediate sheet (15) and being capable of being removed from the base with said sheet by way of the latter being drawn off, it being possible for an overhang or protrusion (35) of the intermediate sheet (15) to be gripped by a drawing-off member and to be moved in order for the intermediate sheet (15) to be carried along, characterized in that a stationary retaining member with clamping jaws (23, 24) for gripping and retaining a lower intermediate sheet (16) in an original position on a base (pallet 12) or a lower stack layer (13) is arranged on that side of the intermediate sheet (15) which is located opposite the movable drawing-off member, which has a clamping member with clamping jaws (19, 20).

13. Apparatus according to Claim 12, characterized in that, for removing an intermediate sheet (16) located on a stack layer (13) which is to be transported away, a conveyor, in particular a rotatably driven roll (29) with suction bores, is arranged above the respectively upper stack layer (13), in a border region which is located at the front in the conveying direction.

14. Apparatus according to Claim 12 or 13, characterized by lateral guide members for the stacks of blanks (11) of the stack layers (13) located one above the other, in particular by upright, rotatable guide rolls (30, 31), on either side, directly alongside the stack layers (13) in a border region which is located at the front in the conveying direction.

15. Apparatus according to Claim 12 or one of the further claims, characterized in that arranged in the conveying direction alongside the stack layers (13), in each case level with the underside of a stack layer which is to be removed, is a removal conveyor (25) which directly adjoins the said stack layer, comprises rotatable rollers (26) and is intended for receiving the rows of the removed stack layers (13).

## Revendications

1. Procédé de prélèvement de piles de flans (11), en particulier constituées de flans d'emballage, à partir d'une sous-couche, en particulier d'une palette (12) et en liaison avec une machine d'emballage, les piles de flans (11) reposant sur une couche intermédiaire flexible mince et étant effectuée par transport de la sous-couche, par extraction de celle-ci et avec celle-ci, caractérisé par les propriétés ci-après :
a) les piles de flans (11) reposent sur deux couches intermédiaires (15, 16),
b) les couches intermédiaires (15, 16) sont appréhendées sur des côtés mutuellement opposés de manière que la couche intermédiaire (15) supérieure avec les piles de flans (11) soient extraites et que la couche intermédiaire (16) inférieure soit maintenue fixée en position initiale.
c) les deux couches intermédiaires (15, 16) disposées l'une au-dessus de l'autre sont constituées d'un flan de couche intermédiaire (37) monopièce, présentant, dans la direction du transport d'évacuation de la couche d'empilement (13), une ligne d'affaiblissement, le long de laquelle le flan de couche intermédiaire (37) est pliée en constituant les couches intermédiaires (15, 16) et qui est séparée (la ligne d'affaiblissement) de la couche intermédiaire inférieure (16), lors de l'extraction de la couche intermédiaire supérieure (15) avec la couche d'empilage (13).

2. Procédé selon la revendication 1, caractérisé par le fait qu'une couche d'empilage (13), constituée de plusieurs piles de flans (11) disposées les unes à côté des autres, est extraite de la couche intermédiaire inférieure (16), au moyen de la couche intermédiaire supérieure (15).

3. Procédé selon la revendication 1 ou 2, caractérisé par le fait que les piles de flans (11) sont tirées par la couche intermédiaire (15) sur un plan de dépose, en particulier sur un transporteur d'évacuation (25) s'étendent au niveau de la couche intermédiaire (15), la couche intermédiaire (15) étant évacuée par traction dans un plan se trouvant au-dessous du transporteur d'évacuation (25).

4. Procédé selon la revendication 3, caractérisé par le fait que les piles de flans (11) reposent en plusieurs rangées (14) en position rapprochée sur la couche intermédiaire (15), les rangées (14) étant orientées transversalement par rapport à la direction du transport d'évacuation.

5. Procédé selon la revendication 1, ou une ou plusieurs des autres revendications, caractérisé par le fait que plusieurs piles de flans (11), situées d'abord les unes au-dessus des autres, sont extraites les unes après les autres, de la couche inférieure ou de la palette (12), avec saisie de la couche intermédiaire (15) se trouvant chaque fois être la couche supérieure et maintien en place de la couche intermédiaire chaque fois inférieure (16).

6. Procédé selon la revendication 3, ou l'une des autres revendications, caractérisé par le fait que la couche intermédiaire supérieure (15) est extraite sur le bord d'une couche de pile (13) sous-jacente dans un plan orienté obliquement vers le bas.

7. Procédé selon la revendication 1, ou l'une des autres revendications, caractérisé par le fait que la couche intermédiaire (16) se trouvant en position inférieure, après l'extraction de la couche intermédiaire supérieure (15) sur une couche de pile (13), est prélevée pendant l'extraction de cette couche de pile (13) par un transporteur séparé en particulier par un rouleau (29), équipé de perçages aspirants, disposé au-dessus de la couche de pile (13) extraite.

8. Procédé selon la revendication 7, caractérisé par le fait que le rouleau (29) repose, pendant l'extraction de la couche de pile (13), avec une pression en particulier légère sur la pile de flans (11) dans la zone de bordure de la palette (12).

9. Procédé selon la revendication 1 ou l'une des autres revendications, caractérisé par le fait que les couches intermédiaires (15, 16) sont positionnées décalées les unes par rapport aux autres et par rapport aux couches de piles (13) sur celles-ci, de manière que la couche intermédiaire supérieure (15) constitue, du côté se trouvant à l'avant dans la direction de transport, une saillie (35) et que la couche intermédiaire inférieure (16) constitue, sur le côté se trouvant à l'arrière dans la direction de transport, une saillie (36), les saillies (35, 36) sortant chacune des contours des couches de pile (13).

10. Procédé selon la revendication 1 ou l'une des autres revendications, caractérisé par le fait que le flan (37) de couche intermédiaire présente des contours décalés en gradin, transversalement par rapport à la ligne d'affaiblissement (ligne de perforation 38), de manière que les décrochements disposés diamétralement soient constitués à titre de saillies (35, 36) des couches intermédiaires (15, 16).

11. Procédé selon la revendication 1 ou l'une des autres revendications, caractérisé par le fait que les couches intermédiaires (15, 16) présentent, dans la zone des évidements (32, 33), des rangées (14), constituées de piles de flans (11), des évidements correspondants, de manière que la couche intermédiaire supérieure (15) constitue, du côté se trouvant à l'avant dans la direction du transport, dans la zone des évidements (33), et la couche intermédiaire inférieure (16) du côté se trouvant à l'arrière dans la direction de transport, dans la zone des évidements (32), une saillie correspondante ou un aplomb par rapport à la couche intermédiaire (15, 16) restante.

12. Dispositif de mise en oeuvre du procédé selon la revendication 1 ou l'une des autres revendications, des piles de flans (11) en particulier constituées des flans d'emballage pouvant être prises d'une couche inférieure en particulier d'une palette (12) et en liaison avec une machine d'emballage où en plus les piles de flans (11) reposent sur une couche intermédiaire (15) flexible, mince et sont susceptibles d'être évacuées par transport par extraction de celle-ci avec elle-même, vis-à-vis de la couche inférieure et un dépassement ou une saillie (35) de la couche intermédiaire (15) étant susceptible d'être saisi, au moyen d'un organe d'extraction, et déplacé en vue d'assurer l'entraînement de la couche intermédiaire (15), caractérisé par le fait que, du côté de la couche intermédiaire (15), opposé à l'organe d'extraction déplaçable et présentant un organe de serrage équipé de mâchoires de serrage (19, 20), est disposé un organe de maintien fixe équipé de mâchoires de serrage (23, 24), pour saisir et maintenir une couche intermédiaire inférieure (16) se trouvant dans une position originelle sur une couche inférieure (palette 12) ou une couche d'empilage inférieure (13).

13. Dispositif selon la revendication 12, caractérisé par le fait qu'un transporteur, en particulier un rouleau (29) entraîné à rotation et équipé de perçages d'aspiration, est disposé au-dessus de la couche d'empilage (13) se trouvant chaque fois en position supérieure, dans une zone de bordure située à l'avant dans la direction de transport, pour assurer le prélèvement d'une couche intermédiaire (16) située sur une couche d'empilage (13) devant être évacuée par transport.

14. Dispositif selon la revendication 12 ou la revendication 13, caractérisé par des organes de guidage latéraux destinés aux piles de flans (11) des couches de piles (13) situées les unes au-dessus des autres, en particulier par des rouleaux de guidage (30, 31) tournants, à axes verticaux, disposés latéralement directement à côté des couches de pile (13), dans une zone de bordure située à l'avant dans la direction du transport.

15. Dispositif selon la revendication 12 ou l'une des autres revendications, caractérisé par le fait que, dans la direction du transport, à côté des couches de pile (13), est respectivement disposé, au niveau de la face inférieure d'une couche de pile à évacuer par transport, un transporteur d'évacuation (25), s'y raccordant directement et constitué de rouleaux (26) tournants, afin de supporter les rangées de couches de pile (13) évacuées par transport.
